**Europäisches Patentamt**

(19) **European Patent Office**

**Office européen des brevets**

(11) Veröffentlichungsnummer : **0 207 986**
**B1**

(12) **EUROPÄISCHE PATENTSCHRIFT**

(45) Veröffentlichungstag der Patentschrift :
05.04.89

(21) Anmeldenummer : 86900760.9

(22) Anmeldetag : 10.01.86

(86) Internationale Anmeldenummer :
PCT/EP 86/00007

(87) Internationale Veröffentlichungsnummer :
WO/8604265 (31.07.86 Gazette 86/17)

(51) Int. Cl.⁴ : **B 01 J 37/02**, B 01 D 53/36

(54) **TRÄGERMATRIX ZUR AUFNAHME VON KATALYTISCH WIRKENDEN VERBINDUNGEN UND VERFAHREN ZUR HERSTELLUNG DER TRÄGERMATRIX.**

(30) Priorität : 17.01.85 DE 3501330

(43) Veröffentlichungstag der Anmeldung :
14.01.87 Patentblatt 87/03

(45) Bekanntmachung des Hinweises auf die Patenterteilung : 05.04.89 Patentblatt 89/14

(84) Benannte Vertragsstaaten :
AT BE DE FR GB IT NL SE

(56) Entgegenhaltungen :
DE--A-- 2 450 664
FR--A-- 2 213 095
US--A-- 3 492 148.

(73) Patentinhaber : **Kraftanlagen AG.**
**Im Breitspiel 7**
**D-6900 Heidelberg 1 (DE)**

(72) Erfinder : **FRAUENFELD, Martin**
**Mühltalstrasse 18**
**D-6900 Heidelberg (DE)**
Erfinder : **VESER, Kurt**
**Berghalde 29**
**D-6900 Heidelberg (DE)**

(74) Vertreter : **Helber, Friedrich G., Dipl.-Ing. et al**
**Patentanwälte Dipl.-Ing. F. G. Helber Dipl.-Ing. J.K.**
**Zenz Giesser Weg 47**
**D-6144 Zwingenberg (DE)**

**Beschreibung**

Die Erfindung betrifft eine Trägermatrix zur Aufnahme von katalytisch wirkenden Verbindungen unter Verwendung von Keramik, insbesondere für eine wechselnde Beaufschlagung unter Relativbewegung der Trägermatrix zu Abgas- und Verbrennungsluftströmen von Feuerungs- und Verbrennungsanlagen, sowie ein Verfahren zur Herstellung einer solchen Trägermatrix.

Zur Beseitigung der in den aus Kesselanlagen von Kraftwerken austretenden Abgasen enthaltenen Stickoxiden haben sich Katalysatoren bewährt, die aus einer homogenen Mischung einer Keramik und metallischen, katalytisch wirkenden Verbindungen bestehen. Derartige Katalysatoren sind für den Durchgang der zu entstickenden Abgase und Aufteilung in Abgasteilströme wabenförmig strukturiert, und mehrere solcher Katalysatoren werden als statisch angeordnete Betten durch Umschaltung im Wechsel von den Abgasen beaufschlaft. Durch die homogene Einmischung der metallischen, katalytisch wirkenden Verbindungen in die Keramik als Träger wird eine ausreichende Temperaturfestigkeit gegenüber der Betriebstemperatur und dem Temperaturgang bei den An- und Abfahrvorgängen der Kesselanlage erzielt. Die Wandstärken der Waben wird in Abhängigkeit von diesen Temperaturbelastungen sowie den mechanischen und hydraulischen Belastungen aus der Abgasreinigung gewählt. Um den geforderten Prozentsatz der Umwandlung der Stickoxide zu erreichen, werden hierbei in der Regel mehrere Wabenkörper zur Bildung entsprechend langer Reaktionswege in Strömungsrichtung der zu behandelnden Abgase übereinander gestapelt.

Desweiteren sind für die Entstickung von Abgasen Molekularsiebe in Schüttbetten vorgeschlagen worden. Der beachtlichen Wirksamkeit dieser Art von Katalysatoren ist jedoch ihr erheblicher Druckverlust beim Durchtritt der Abgase durch das Schüttbett gegenüberzustellen.

Schließlich sind auch Katalysatoren bekannt, bei denen metallische Träger — beispielsweise Gitter — vollflächig von einer keramischen Beschichtung zur Aufnahme katalytisch wirkender Verbindungen umschlossen sind. In diesem Zusammenhang sind zahlreiche Vorschläge gemacht worden, um durch ein Aufrauhen der Oberfläche des metallischen Trägers die Haftung der keramischen Beschichtung nach Art einer mechanischen Verzahnung zu verbessern. Es hat sich jedoch gezeigt, daß insbesondere dann, wenn der Katalysator zusätzlich zu den Temperaturwechselbeanspruchungen auch noch mechanischen Beanspruchungen unterworfen ist, die Haftung der keramischen Beschichtung auf dem Metall noch nicht befriedigt bzw. stoßempfindlich ist.

Der Erfindung liegt daher die Aufgabe zugrunde, eine zuverlässige Verbindung zwischen einem metallischen Träger und einer zur Aufnahme von katalytisch wirksamen Verbindungen bestimmten keramischen Beschichtung zu schaffen, welche hohe Standzeit auch bei ständigen Temperaturwechselbeanspruchungen und hohen hydraulischen mechanischen Belastungen aufweist, wie sie beispielsweise bei der Reinigung von Heizflächen umlaufender Regenerativ-Wärmetauscher durch die dort zur Reinigung verwendeten Rußbläser auftreten.

Ausgehend von einer Trägermatrix der eingangs erwähnten Art wird diese Aufgabe erfindungsgemäß gelöst durch einen metallischen Träger, wenigstens eine haftend auf dem Träger aufgebrachte Zwischenschicht, von denen wenigstens eine aus Emaille besteht und durch eine auf der Zwischenschicht aufgebrachte keramische Deckschicht zur Aufnahme von katalytisch wirkenden Verbindungen.

Durch die als Brücke wirkende Zwischenschicht aus Emaille gelingt es überraschenderweise, eine zuverlässige Verbindung zwischen einem metallischen Träger einerseits und einer keramischen Beschichtung andererseits herzustellen. Neben der Aufgabe der Zwischenschicht, als Brücke zwischen dem metallischen Träger und der Keramikschicht zu wirken, werden von der Emaille zugleich auch unterschiedliche Dehnungen des metallischen Trägers und der Keramikschicht bei thermischen und mechanischen Wechselbeanspruchungen ausgeglichen. Aufgrund der höheren Beanspruchbarkeit der erfindungsgemäßen Trägermatrix besteht nunmehr eine verbesserte Möglichkeit der Reinigung der katalytisch wirksamen Flächen, welche Voraussetzung für eine verlängerte Standzeit des Katalysators insgesamt bildet, da durch häufigere und intensivere Reinigung — beispielsweise mittels der oben erwähnten, aus der Reinigung von Regenerativ-Wärmetauschern bekannten Rußbläsern — ein länger dauernder Kontakt mit eventuell niedergeschlagenen Katalysatorgiften vermieden wird.

Der metallische Träger der erfindungsgemäßen Trägermatrix kann auch die Form korrugierter und/oder ondulierter Metallbleche haben. Derartige Metallbleche werden zu Speicherkörpern zusammengestellt, beispielsweise auch in umlaufenden Regenerativ-Wärmetauschern für die Kesselluftvorwärmung eingesetzt. Durch zusätzliche Beschichtung dieser Speicherkörper mit der keramischen Deckschicht unter Haftungsvermittlung durch die Zwischenschicht aus Emaille wird es somit möglich, den zur Entstickung vorgesehenen Katalysator in den Regenerativ-Wärmetauscher für die Kesselluftvorwärmung zu integrieren bzw. Es können entsprechend solchen umlaufenden Regenerativ-Wärmetauschern ausgebildete Katalysatoren aufgebaut werden, welche eine ständige Reinigung der jeweils gerade nicht von den zu reinigenden Kesselabgasen durchströmten Bereich ermöglichen. Die Profilierungen der Trägerbleche bewirkt dabei eine für einen wirksamen Wärmeaustausch und zugleich eine erhöhte Umwandlung von Stickoxiden günstige Turbulenz.

Die Dicke der metallischen Träger wird dabei vorzugsweise im Bereich zwischen 0,5 und 1,0 mm gewählt, wobei dann die Zwischenschicht aus Emaille eine Dicke zwischen 0,075 und 0,15 mm und die keramische Deckschicht eine Dicke zwischen 0,2 und 0,5 mm hat. Der gewählt Bereich für die Dicke der Emaille-Zwischenschicht hat sich als optimal für die Bildung der Brücke zwischen dem metallischen Träger und der keramischen Deckschicht herausgestellt. Insbesondere hat sich auch gezeigt, daß bei einer Wahl der Zwischenschicht-Dicke in diesem Bereich ein Verschluß der Poren der Keramik mit Emaillematerial weitgehend vermieden wird.

Bei einem in der Praxis bewährten Ausführungsbeispiel beträgt die Dicke des metallischen Trägers 0,5 mm und der Emaille-Zwischenschicht 0,125 mm. Die Dicke der keramischen Deckschicht liegt dann bei 0,25 bis 0,35 mm. Das Verhältnis der Größe der Oberflächen zur Aufnahme katalytisch wirksamer Verbindungen auf der Keramikdechschicht im Verhältnis zum räumlichen Volumen der Trägermatrix insgesamt wird hierbei besonders günstig.

Bei der Herstellung der erfindungsgemäßen Trägermatrix wird erfindungsgemäß so verfahren, daß der metallische Träger in einen Emailleschlicker getaucht und dann zur Ausbildung der Emaille-Zwischenschicht im Ofen zwischen 800 und 900 °C gebrannt wird, worauf auf den emaillierten metallischen Träger ein Keramikschlicker aufgebracht und dieser anschließend in einem Ofen zu einer mit der Emaille-Zwischenschicht haftend verbundenen Keramikschicht gebrannt wird. Durch die Hintereinanderschaltung dieser Verfahrensschritte wird zunächst eine zuverlässige Bindung zwischen dem metallischen Träger und der Zwischenschicht aus Emaille in einem ersten Brand erzielt.

Bei dem nachfolgenden zweiten Brand des zuvor aufgetragenen Keramikschlickers erfolgt eine besonders zuverlässige Verbindung der entstehenden Keramikschicht mit der Emaille, was darauf zurückgeführt wird, daß bei diesem zweiten Brand die Emaille zumindest oberflächlich wieder erweicht wird und die Unregelmäßigkeiten der entstehenden Keramikschicht in die erweichte Emailleschicht einsinken.

Der Begriff « katalytisch wirkende Verbindungen » ist im Rahmen der Erfindung nicht auf Verbindungen im chemischen Sinne beschränkt, sondern soll auch reine Elemente und deren Gemische einschließen, soweit sie die gewünschten katalytischen Eigenschaften aufweisen.

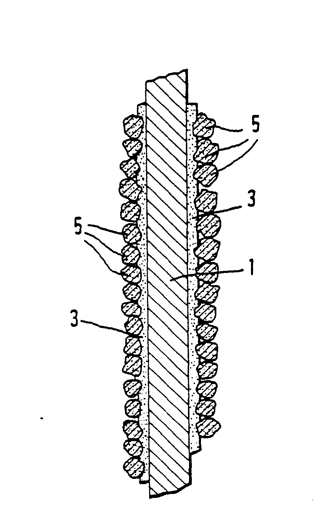

Die Erfindung ist nachstehend in Verbindung mit der Zeichnung näher erläutert, welche einen Teilabschnitt einer erfindungsgemäßen Trägermatrix schematisch im Vertikalschnitt zeigt.

Der in der Zeichnung schematisch dargestellte Teilabschnitt weist einen, beispielsweise von einem Metallblech gebildeten metallischen Träger 1 auf, der nach dem Eintauchen in einen Emailleschlicker durch einen ersten Brand beidseitig mit einer Zwischenschicht 3 aus Emaille versehen ist.

Durch Auftragen eines keramischen Schlickers auf den zuvor emaillierten metallischen Träger 1, 3 und nachfolgendes erneutes Brennen entsteht auf den Emaille-Zwischenschichten 3 je eine dickere poröse Keramikschicht 5, welche in die beim zweiten Brand erweichen, als Brücke dienenden Zwischenschichten 3 aus Emaille eingesunken sind und dabei zuverlässig nach Art einer mechanischen Verzahnung in der Emaille verankert sind.

## Patentansprüche

1. Trägermatrix zur Aufnahme von katalytisch wirkenden Verbindungen unter Verwendung von Keramik, insbesondere für eine wechselnde Beaufschlagung unter Relativbewegung der Trägermatrix zu Abgas- und Verbrennungsluftströmen von Feuerungs- und Verbrennungsanlagen, gekennzeichnet durch einen metallischen Träger (1), wenigstens eine haftend auf dem Träger (1) aufgebrachte Zwischenschicht (3), von denen wenigstens eine aus Emaille besteht, und durch eine auf der Zwischenschicht (3) aufgebrachte poröse keramische Deckschicht (5) zur Aufnahme von katalytisch wirkenden Verbindungen.

2. Trägermatrix nach Anspruch 1, dadurch gekennzeichnet, daß der metallische Träger (1) die Form korrugierter und/oder ondulierter Metallbleche hat.

3. Trägermatrix nach Anspruch 1 oder 2, dadurch gekennzeichnet, daß der metallische Träger (1) eine Dicke zwischen 0,5 und 1,0 mm, die Zwischenschicht (3) aus Emaille eine Dicke zwischen 0,075 und 0,15 mm und die keramische Deckschicht (5) eine Dicke zwischen 0,2 und 0,5 mm hat.

4. Trägermatrix nach Anspruch 3, dadurch gekennzeichnet, daß der metallische Träger (1) eine Dicke von etwa 0,5 mm, die Zwischenschicht (3) aus Emaille eine Dicke von etwa 0,125 mm und die keramische Deckschicht (5) eine Dicke zwischen 0,25 und 0,35 mm hat.

5. Verfahren zur Herstellung einer Trägermatrix zur Aufnahme von katalytisch wirkenden Verbindungen unter Verwendung eines metallischen Trägers, dadurch gekennzeichnet, daß der metallische Träger in einen Emailleschlicker getaucht und dann zur Ausbildung einer Emailleschicht im Ofen zwischen 800° und 900 °C gebrannt wird, worauf auf den emaillierten metallischen Träger ein Keramikschlicker aufgebracht und dieser anschließend in einem Ofen zu einer mit der Emailleschicht haftend verbundenen Keramik-Deckschicht gebrannt wird.

## Claims

1. Carrier matrix for the absorption of catalytically active compounds with the use of ceramic, especially for alternating exposure, with relative movement of the carrier matrix, to exhaust gas and combustion air streams of furnaces and boilers, characterized by a metal core (1), at least one intermediate coating (3) adheringly applied to the core (1), of which at least one [intermediate coating] consists of vitreous enamel, and by a porous ceramic cover coating (5) applied to the intermediate coating (3) for the absorption of catalytically active compounds.

2. Carrier matrix according to claim 1, characterized in that the metal core (1) has the form of corrugated and/or crimped sheet metal.

3. Carrier matrix according to claim 1 or 2, characterized in that the metal core (1) has a thickness between 0.5 and 1.0 mm, the intermediate coating (3) of vitreous enamel a thickness between 0.075 and 0.15 mm, and the ceramic cover coating (5) a thickness between 0.2 and 0.5 mm.

4. Carrier matrix according to claim 3, characterized in that the metal core (1) has a thickness of about 0.5 mm, the intermediate layer (3) of vitreous enamel a thickness of about 0.125 mm, and the ceramic cover coating (5) a thickness between 0.25 and 0.35 mm.

5. Method for preparing a carrier matrix for the absorption of catalytically active compounds using a metal core, characterized in that the metal core is immersed in a vitreous enamel slip and then fired in the kiln between 800° and 900 °C to form a vitreous enamel coating, and then a ceramic slip is applied to the enameled metal core and the latter is then fired in a kiln to form a ceramic cover coating adheringly bonded to the vitreous enamel coating.

**Revendications**

1. Matrice support destinée à recevoir des composés à action catalytique avec utilisation de céramique, en particulier pour une action alternée avec mouvement relatif de la matrice support par rapport à des courants de fumées et d'air comburant d'installations de chauffe et de combustion, caractérisée par un support métallique (1), au moins une couche intermédiaire (3) appliquée sur ce support (1) de manière à y adhérer, dont au moins une est en émail, et une couche céramique poreuse de couverture (5) appliquée sur la couche intermédiaire (3) et destinée à recevoir des composés à action catalytique.

2. Matrice support selon la revendication 1, caractérisée par le fait que le support métallique (1) a la forme de tôles métalliques ondulées.

3. Matrice support selon l'une des revendications 1 et 2, caractérisée par le fait que le support métallique (1) a une épaisseur comprise entre 0,5 et 1,0 mm, la couche intermédiaire (3) d'émail une épaisseur comprise entre 0,075 et 0,150 mm et la couche céramique de couverture (5) une épaisseur comprise entre 0,2 et 0,5 mm.

4. Matrice support selon la revendication 3, caractérisée par le fait que le support métallique (1) a une épaisseur d'environ 0,5 mm, la couche intermédiaire (3) d'émail une épaisseur d'environ 0,125 mm et la couche céramique de couverture (5) une épaisseur comprise entre 0,25 et 0,35 mm.

5. Matrice de fabrication d'une matrice support destinée à recevoir des composés à action catalytique avec utilisation d'un support métallique, caractérisé par le fait qu'on plonge le support métallique dans une barbotine d'émail puis on le cuit au four entre 800 et 900 °C pour former une couche d'émail, puis on applique une barbotine céramique sur le support métallique émaillé et on la cuit dans un four pour obtenir une couche céramique de couverture unie par adhérence à la couche d'émail.